(19) Europäisches Patentamt

European Patent Office

Office européen des brevets

(11) Veröffentlichungsnummer: **0 501 100 A1**

(12) **EUROPÄISCHE PATENTANMELDUNG**

(21) Anmeldenummer: **92100023.8**

(22) Anmeldetag: **02.01.92**

(51) Int. Cl.⁵: **B29C 67/22**

(30) Priorität: **28.02.91 DE 4106396**

(43) Veröffentlichungstag der Anmeldung:
**02.09.92 Patentblatt 92/36**

(84) Benannte Vertragsstaaten:
**AT ES FR GB IT**

(71) Anmelder: **Dunlop GmbH**
**Birkenhainer Strasse 77**
**W-6450 Hanau(DE)**

(72) Erfinder: **Dieter,Siegmund**
**Friedrichstrasse 38**
**W-6450 Hanau(DE)**
Erfinder: **Weigand,Günter**
**Jahnstrasse 6**
**W-6463 Freigericht(DE)**
Erfinder: **Koch,Jürgen**
**Breslauer Ring**
**W-6382 Friedrichsdorf(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Verfahren zum Herstellen hinterschäumter Formteile.**

(57) Es wird ein Verfahren zum Herstellen von hinterschäumten Formteilen beschrieben, bei durch das Zusammenwirken zwischen einem vorgefertigten Außenbezug (1) und einem Trikotstoffmaterial (4) das jeweilige Formteil ohne das Erfordernis von Nacharbeiten hergestellt werden kann. Dazu werden entweder die Ränder des vorgefertigten Außenbezugs mit einem Trikotstoffmaterial vernäht, so daß eine sack- oder beutelförmige Struktur entsteht, in die das Schaumgemisch (5) eingebracht wird, oder es wird in den vorgenähten Außenbezug eine geschlossene, vorzugsweise einen Konturrahmen (3) umgebende Trikotstoffhülle eingebracht, die dann zur Aufnahme des Schaumgemisches dient.

Fig. 5

EP 0 501 100 A1

Die Erfindung betrifft ein Verfahren zum Herstellen eines hinterschäumten Formteils, bei dem ein vorgefertigter Außenbezug unter zumindest bereichsweiser Vorpositionierung in eine verschließbare Form eingebracht und nach dem Eintragen einer Schaummischung durch deren Expansion in den Formhohlraum gedrückt und an dessen Wänden zur Anlage gebracht wird.

Verfahren dieser Art sind bekannt und werden in der Praxis beispielsweise zur Herstellung von Sitz- und Rückenpolstern für Kraftfahrzeuge eingesetzt.

Problematisch ist bei allen bekannten verfahren, daß ein unmittelbares Anschäumen der Bezugsränder nicht möglich ist oder bei Einsatz komplizierter Formenkonstruktion nur in unbefriedigender Weise erreicht werden kann, so daß ein Beschneiden, Umlegen, und / oder Festkleben des Bezugsrandes und / oder sonstige nachbessernde Handarbeit nach der Entnahme des hinterschäumten Formteils aus der Formenwanne erforderlich ist.

Aufgabe der Erfindung ist es, das Verfahren der eingangs angegebenen Art in besonders wirtschaftlicher Weise derart weiterzubilden, daß hinterschäumte Formteile ohne jegliche erforderliche Nacharbeit, das heißt mit einwandfrei fixierten Bezugsrändern gefertigt werden können, und zwar sowohl ohne also auch vorzugsweise mit integriertem Konturrahmen.

Gelöst wird diese Aufgabe nach einer ersten Ausführungsvariante der Erfindung im wesentlichen dadurch, daß in dem vorgefertigten Außenbezug zumindest ein aus einem elastisch dehnbaren, eine geringe Rückstellkraft aufweisenden Material bestehender und zumindest im wesentlichen allseitig geschlossen ausgebildeter Innenbezug angeordnet und die Schaummischung über eine Öffnung in diesen Innenbezug eingebracht wird.

Nach einer zweiten Ausführungsvariante der Erfindung wird die gestellte Aufgabe dadurch gelöst, daß die Ränder des vorgefertigten Außenbezugs unter Ausbildung einer Beutel- oder Sackstruktur mit einem vorzugsweise elastisch dehnbaren Material verbunden, insbesondere vernäht werden, und daß die Schaummischung sowie gegebenenfalls vor deren Zuführung ein Konturrahmen über eine Öffnung in dem die Rückseite des Formteils bildenden, elastisch dehnbaren Material in die Beutel- oder Sackstruktur eingebracht wird.

Durch die Verwendung eines Innenbezugs, der bezüglich des Außenbezugs frei beweglich ist und zur Aufnahme der Schaumstoffmischung dient, oder die Schaffung einer sack- bzw. beutelförmigen Struktur durch Verbindung der Ränder des vorgefertigten Außenbezugs mit einem insbesondere elastisch dehnbaren Material wird in überraschend einfacher und äußerst zuverlässiger Weise erreicht, daß das jeweilige Formteil nach Beendigung des Ausschäumvorgangs nach der üblichen Aushärtezeit völlig fertig aus der Formenwanne entnommen werden kann und demgemäß kein Beschneiden, Umlegen, und / oder Festkleben des Bezugsrandes mehr erforderlich ist.

Während des Aufschäumvorgangs stellen der Innenbezug oder das mit den Rändern des Außenbezugs vorzugsweise vernähte dehnbare Material, insbesondere im Zusammenwirken mit einem eingebrachten Konturrahmen sicher, daß die Bezugsstoffränder in definierter Weise gegen den Formendeckel gedrückt werden und in der Soll-Lage anliegen, bevor der Schaum selbst an den Deckel gelangen kann. Dadurch wird auch eine exakte Umbiegekante am Außenbezug erhalten, und zwar ohne Einsatz irgendwelcher mechanischer Halte- oder Klammermittel, die von außerhalb der Form in den Forminnenraum zur Fixierung des Außenbezugs bzw. des Außenbezugsrandes eingreifen müssen.

Vorzugsweise wird als dehnbares Material ein Trikotstoff und als Außenbezug insbesondere ein Material mit einer innenseitigen Schaumstoffkaschierung verwendet. Die Maschenweite des Trikotstoffes wird dabei zweckmäßigerweise so gewählt, daß sich im Falle der ersten Ausführungsvariante der Erfindung eine ausreichende Verbindung von Schaum, Trikotstoff und Kaschierschaum des Außenbezugs ergibt.

Durch die Verwendung eines Innenbezugs ergibt sich der Vorteil, daß ein übertreten des Schaumes auf den Bezugsstoff sowie Oberflächenfehler verhindert werden. Da dieser Innenbezug bzw. der mit den Bezugsstoffrändern vernähte Trikotstoff im Bereich der Rückseite des Formkörpers vorhanden sind, wird die Abriebfestigkeit der Rückseite des Formteils durch die nach dem Ausschäumen verhärtende Oberfläche erhöht. Im Falle von Formteilen für Kraftfahrzeuge kann außerdem das Scheuergeräusch an der Karosse vermindert werden.

Ein weiterer Vorteil ergibt sich dadurch, daß im Falle des Einsatzes eines Innenbezugs eine Temperierung der zur Herstellung der Formteile verwendeten Formen überflüssig wird.

Nach einer besonders vorteilhaften Ausgestaltung der Erfindung wird in die aus vorgefertigtem Außenbezug und Innenbezug bestehende Anordnung ein insbesondere aus einem Drahtrahmen bestehender Konturrahmen eingebracht und entsprechend seiner Soll-Lage im fertigen Formteil positioniert und fixiert. Speziell wird dabei der Konturrahmen in eine schlauchförmig ausgebildete, den Innenbezug darstellende Trikotstoffhülle gesteckt, die Hülle mit Ausnahme einer Einlaßöffnung für das Schaumgemisch verschlossen und dann der Konturrahmen in vollständig umhülltem Zustand in den rückseitig offenen Außenbezug eingebracht, worauf er entsprechend seiner Soll-Lage im fertigen Formteil positioniert und fixiert wird.

Die Verwendung eines derartigen Konturrahmens trägt dazu bei, ein Schrumpfen der Außenkontur des Formteils zu verhindern, diese Außenkontur zu verstärken und dünne Stege zu stützen. Gleichzeitig stellt dieser Konturrahmen einen Träger für die Anschlußteile zur Karosseriebefestigung im Falle der Verwendung von Formteilen für Kraftfahrzeuge bei.

Weitere vorteilhafte Ausgestaltungen der Erfindung sowie eine zweckmäßig ausgestaltete Form zur Durchführung des erfindungsgemäßen Verfahrens sind in Unteransprüchen beschrieben.

Nachfolgend wird die Erfindung anhand von Ausführungsbeispielen unter Bezugnahme auf die Zeichnung näher erläutert; in der Zeichnung zeigt:

Figur 1    eine schematische Schnittdarstellung eines nach dem Verfahren gemäß der Erfindung hergestellten Formteils,

Figur 2    eine schematische Darstellung eines Konturrahmens zur Integration in ein quaderförmiges Formteil,

Figur 3    eine schematische Darstellung eines vorgenähten Bezugs für ein einen Konturrahmen nach Figur 2 enthaltendes Formteil,

Figur 4    eine schematische Schnittdarstellung einer zur Durchführung des Verfahrens nach der Erfindung geeigneten Form mit bereits eingelegtem vorgefertigten Bezug und Konturrahmen, und

Figur 5    eine schematische Schnittdarstellung einer im wesentlichen der Form nach Figur 4 entsprechenden, jedoch komplett geschlossenen Form mit ausgeschäumtem Bezug sowie an der Form vorgesehenem Vakuumanschluß.

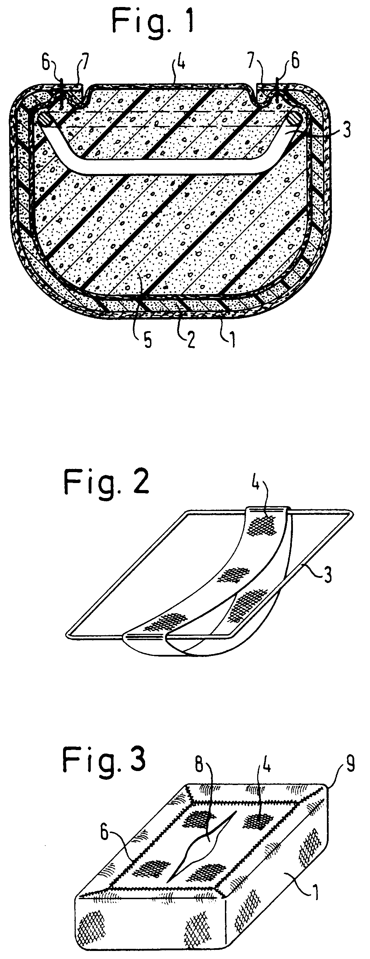

Die schematische Schnittansicht nach Figur 1 zeigt ein hinterschäumtes Formteil aus einem vorgenähten Außenbezug 1 mit Schaumstoffkaschierung 2 sowie einer Schaumstofffüllung 5 und in das Formteil integriertem Konturrahmen 3.

Ein derartiges Formteil kann gemäß der Erfindung nach den beiden bereits geschilderten Ausführungsvarianten des erfindungsgemäßen Verfahrens hergestellt werden.

Gemäß der ersten Variante wird ein Konturrahmen 3 in einen einen Innenbezug bzw. eine Innenhülle 4 bildenden Trikotstoffschlauch gesteckt und in den vorgefertigten Außenbezug 1 eingebracht bzw. in diesem Außenbezug 1 positioniert. Die Ränder 7 des Außenbezugs 1 werden dabei nicht mit dem Innenbezug 4 aus Trikotstoff vernäht. Die Öffnung zum Einbringen des Schaumes wird dabei nachträglich an der Rückseite des Polsterteils in dem Trikotstoff angebracht, und die offenen Enden des Trikotstoffschlauches werden umgelegt und / oder verschlossen.

Gemäß dieser Ausführungsvariante des erfindungsgemäßen Verfahrens wird ein Formteil nach Figur 1 erhalten, wobei jedoch bei dieser Ausführungsvariante die in Figur 1 angedeutete Nähnaht 6 im Bereich der Außenbezugsränder 7 nicht vorhanden ist.

Gemäß der zweiten Ausführungsvariante der Erfindung werden die Ränder 7 des vorgenähten Außenbezugs 1 mit einem elastisch dehnbaren Material, insbesondere mit einem Trikotstoff 4 vernäht, so daß sich eine beutel- oder sackartige Struktur ergibt, die vorderseitig aus dem Polsterstoff bzw. Außenbezug 1 und rückseitig aus einem Trikotstoff 4 besteht. Die Öffnung zum Einbringen eines Konturrahmens 3 und zum Einbringen des Schaumes wird zweckmäßigerweise rückseitig im Trikotstoff 4 vorgesehen. Bei dieser Variante verbindet sich der Schaum direkt mit der rückseitigen Schaumstoffkaschierung 2 des Außenbezugs.

Ein nach dieser zweiten Ausführungsvariante der Erfindung gefertigtes Formteil besitzt ebenfalls den in Figur 1 gezeigten Aufbau, wobei in diesem Falle die angedeuteten Nähte 6 zwischen dem Trikotstoff 4 und dem Außenrand 7 des Außenbezugs 1 vorhanden sind, der Trikotstoff 4 jedoch nur im rückseitigen Bereich des Formteils vorhanden ist.

Grundsätzlich möglich ist es jedoch auch, bei dieser zweiten Ausführungsvariante, bei der der Trikotstoff 4 mit den Außenrändern 7 des Außenbezugs 1 vernäht ist, einen sack- oder beutelförmigen Aufbau vorzusehen, so daß - wie dies in Figur 1 zu sehen ist - auch in diesem Falle zwischen Schaumstoff 5 und Kaschierschaum 2 eine Trikotstofflage vorhanden ist, deren Maschenweite so gewählt ist, daß sich noch eine einwandfreie Verbindung zwischen dem Schaum 5 und dem Kaschierschaum 2 ergibt.

Der Schnittdarstellung nach Figur 1 ist zu entnehmen, daß die Ränder 7 des Außenbezugs 1 am Übergang zur Rückseite des Formteils exakt umgebogen und in dieser umgelegten Position durch die Verbindung mit dem Schaumstoff 5 eindeutig fixiert und positioniert sind. Ein auf diese Weise ausgebildetes bzw. gefertigtes Formteil erfordert daher keinerlei nachträgliches Beschneiden, Umlegen und / oder Festkleben des Außenbezugsrandes.

Figur 2 zeigt ein Beispiel für einen Konturrahmen 3, der für eine quaderförmige Kastenform bestimmt ist.

Ein derartiger Konturrahmen, der im Regelfall aus einem entsprechend stabilen Draht geformt wird, verläuft längs der Randkontur eines Formteils oder tangiert zumindest zum Teil die wichtigsten Konturpunkte. Um den Konturrahmen erstreckt sich ein Trikotstoffstreifen, der eine Schutzlage 22 bildet, da er nach dem Einbringen des Konturrahmens in den Außenbezug in dem der Einfüllöffnung für die Schaummischung gegenüberliegenden Bereich gelegen ist und somit ein Durchschlagen des Schaumes durch den Bezug verhindert. Eine solche Schutzlage 22 kann bei beiden Ausführungsvarianten des erfindungsgemäßen Verfahrens verwendet werden.

Ein Konturrahmen der dargestellten Art wird im Falle der zweiten Ausführungsvariante der Erfindung in die Beutel- bzw. Sackstruktur eingebracht, die - wie dies in Figur 3 gezeigt ist - vom Außenbezug 1 und dem über die Nähte 6 mit den Außenbezugsrändern verbundenen Trikotstoff 4 gebildet ist. Dabei sind im Regelfall die wichtigsten Konturpunkte und / oder Konturlinien am Bezug nähtechnisch markiert und werden mit den entsprechenden Punkten und / oder Linien des Konturrahmens in Übereinstimmung gebracht. In der Darstellung nach Figur 3 ist ein typischer Konturpunkt 9 an einem Eckbereich gekennzeichnet, an dem die Position von Außenbezug und Konturrahmen übereinstimmen muß. Selbstverständlich können mehrere derartige Konturpunkte oder auch Konturlinien in der bereits erläuterten Weise vorgesehen sein. Der rückseitige Trikotstoff 4 ist mit einem Schlitz 8 versehen, über den das Schaumgemisch eingebracht werden kann, wenn die entsprechend vorbereitete sack- bzw. beutelförmige Struktur mit dem eingebrachten Konturrahmen in einer Form in der erforderlichen Weise positioniert sind.

Während bei der im Zusammenhang mit Figur 3 geschilderten Ausführungsvariante ein Vernähen des Trikotstoffs mit den Rändern des Bezugsstoffs erforderlich ist und durch dieses Vernähen eine sack- bzw. beutelförmige Struktur geschaffen wird, erfordert die als erste Ausführungsvariante dargestellte Ausführungsform der Erfindung kein derartiges Vernähen von Trikotstoff und Außenbezug. In diesem Falle wird nämlich der Konturrahmen 3, gegebenenfalls mit Schutzlage 22, in einen Trikotstoffschlauch gesteckt, dessen Enden dann zugenäht, verklebt oder einfach umgeschlagen werden, so daß dieser Trikotstoffschlauch eine geschlossene Innenhülle darstellt, die zusammen mit dem Konturrahmen in den vorgenähten Außenbezug eingebracht und in relativ zu dem Außenbezug positioniert wird. Die vom Trikotstoffschlauch gebildete geschlossene Innenhülle, in die über eine entsprechende Öffnung das Schaumgemisch eingebracht wird, wird dann beim Aufschäumvorgang entsprechend ausgeweitet bzw. ausgedehnt und legt sich an den Außenbezug bzw. Kaschierschaum 2 in der in Figur 1 angedeuteten Weise an.

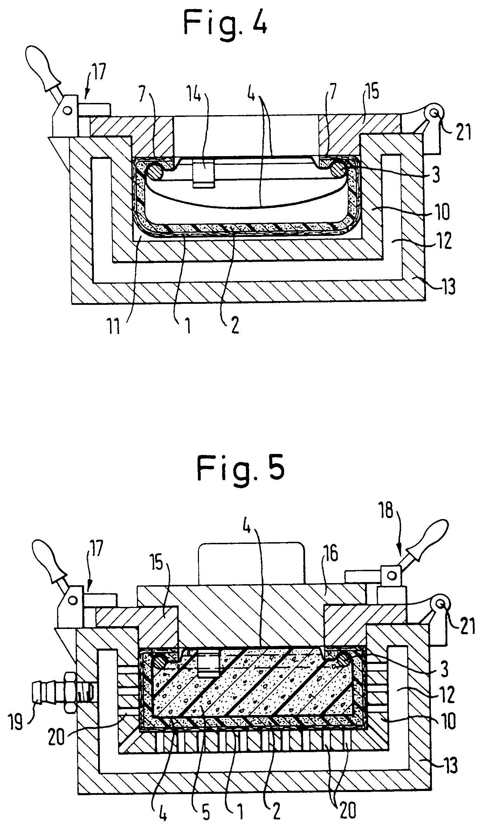

Figur 4 zeigt in Form einer Schnittdarstellung ein Beispiel für eine Form zur Durchführung des erfindungsgemäßen Verfahrens.

Diese Form besteht aus einer Formenwanne 10 mit einem Formwannen-Innenraum, der der Gestalt des jeweils herzustellenden Formteils angepaßt ist, sowie einer Formwannen-Außenwand 13 sowie einem zwischen diesen beiden Wandungen 10, 13 liegenden Formwannen-Zwischenraum 12.

Dieser Formenwanne 10 zugeordnet ist ein über ein Scharnier 21 schwenkbar angelenktes Deckenrandteil 15, das bezüglich der Formenwanne 10 mittels eines schematisch angedeuteten Verschlusses 17 fixiert werden kann. An diesem Deckelrandteil 15 sind mehrere über den Umfang verteilte Konturrahmenbefestigungen 14 vorgesehen.

Es wurde bereits erläutert, daß ein vorgefertigter Außenbezug 1 zusammen mit dem ausdehnbaren Innenbezug entsprechend der ersten Ausführungsvariante der Erfindung im Regelfall vor dem Einbringen in eine Form über einen Konturrahmen gespannt und in seinen Randkonturen eindeutig entsprechend dem fertigen Formteil fixiert und positioniert wird.

Ein derartig vorbereiteter Bezug wird zusammen mit dem Konturrahmen als Einheit in die Schäumform eingebracht. Anschließend wird das Deckelrandteil 15 auf den Formendichtrand geschwenkt und verriegelt. Der Konturrahmen 3 und damit der über diesen Konturrahmen gespannte Bezug werden dann an den Konturrahmenbefestigungen bzw. Konturrahmenaufnahmen 14 am Deckelrandteil 15 eingehängt bzw. fixiert, so daß der in Figur 4 gezeigte Zustand vor Beginn des Einbringens des Schaumgemisches gegeben ist.

Das Schaumgemisch kann durch einen im Mittelbereich der Form gelegenen gelegenen Schlitz bzw. eine entsprechende Öffnung eingebracht werden und trifft dabei auf den Trikotstoff-Innenbezug 4 oder die im Zusammenhang mit Figur 2 bereits erläuterte Schutzlage. Nach dem Einbringen des vorzugsweise cremigen und sehr schnell aufschäumenden Schaumgemisches, das praktisch nur im unmittelbaren Einlaßbereich eine nasse Lösung darstellt, wird die Form mittels des in Figur 5 gezeigten Innendeckels 16 verschlossen und dieser Innendeckel mittels Verschlüssen 18 bezüglich des Deckelrandteils 15 fixiert.

Es sei noch erwähnt, daß der Schaum auch bei geschlossenem Innendeckel oder einer in analoger Weise verwendbaren einteiligen Deckelkonstruktion in die Form eingebracht werden kann, wobei in diesem Falle dann eine verschließbare Einfüllöffnung vorgesehen wird. Zweckmäßig ist es dabei, die Trikotstoffränder des Einfüllspaltes 8 auf der Rückseite des Bezuges, die sich unter der Einschäumöffnung befinden, durch diese Einschäumöffnung zu ziehen und die durchgezogenen Trikotstoffränder auf der Deckelaußenseite festzuspannen. Nach dem Einschäumvorgang wird die Einfüllöffnung natürlich dicht verschlossen.

Während des anschließenden Aufschäumvorganges wird bei dieser Ausführungsvariante der Erfindung der den Innenbezug 4 bildende Trikotstoff aufgrund der Volumenvergrößerung des Schaumes gegen den Außenbezug bzw. die am Außenbezug vorgesehene Kaschierung gedrückt, und dieses zunehmende Ausfüllen des Innenbezugs führt vor allem auch dazu, daß die Bezugsstoffränder 7 exakt gegen das Deckelrandteil 15 gedrückt und dort flächig zur Anlage gebracht werden, bevor der Schaum selbst in diesem Bereich ankommt. Insbesondere wird auf diese Weise verhindert, daß während des Aufschäumvorganges Schaum zwischen das Deckelrandteil und den Bezugsstoffrand 7 gelangen kann. Da zwischen Außenbezug 1 und Innenbezug 4 im Verlauf des Aufschäumvorgangs Relativbewegungen möglich sind, wird der Außenbezug 1 äußerst exakt gegen die Innenwand der Formenwanne sowie gegen das Deckelrandteil 15 gedrückt, und es entstehen sehr exakte und eindeutig reproduzierbare Außenkonturen am fertigen Formteil. Besonders günstig wirkt sich hinsichtlich des angestrebten definierten Andrückens der Bezugsstoffränder an den Formendeckel das Vorhandensein eines Konturrahmens 3 aus, der stets eine besonders exakte Fertigung des jeweiligen Formteils ermöglicht und die gewünschte Soll-Lage der Bezugsstoffränder mit höchster Sicherheit gewährleistet.

Figur 5 zeigt eine geschlossene Form nach erfolgtem Ausschäumvorgang, wobei in diesem Stadium der Innenbezug 4 vollflächig am Außenbezug 1 bzw. an dessen Innenkaschierung sowie direkt am Innendeckel 16 anliegt.

Wesentlich ist im Rahmen des erfindungsgemäßen Verfahrens auch, daß die erreichbaren Einlegezeiten, das heißt die zum Einbringen der vorgenähten und mit Konturrahmen versehenen Bezüge in die Form sehr kurz sind und beispielsweise im Bereich von einer Minute bis eineinhalb Minuten liegen. Das für den Innenbezug verwendbare Material, das vorzugsweise aus einem Trikotstoff besteht, kann jeweils so ausgewählt werden, daß ein definierter Schaumdurchtritt ermöglicht wird, der eine Verbindung mit der Schaumstoffkaschierung erbringt, jedoch ein Durchschlagen auf den Außenbezugsstoff verhindert.

Kommt beim Ausschäumen ein Kaltschaum zur Anwendung, so ist es erforderlich, die Zellstruktur nach dem Aushärten aufzubrechen. Dieses Aufbrechen der Zellstruktur im fertigen Formteil kann dadurch geschehen, daß das Formteil aus der Schäumform entnommen und in einem separaten Vakuumbehälter Unterdruck ausgesetzt wird, der zu einem Aufbrechen der Zellstruktur führt.

Figur 5 zeigt eine Form, die es grundsätzlich ermöglicht, das Formteil in der Schäumform zu belassen und ein Aufbrechen der Zellstruktur durch unmittelbares Anlegen von Vakuum zu bewirken. Diese Vorgehensweise ist dann möglich, wenn es die im Zuge der Fertigung gegebenen Taktzeiten erlauben, diesen Arbeitsgang noch in der Schäumform durchzuführen. Die Schäumform ist zu diesem Zweck mit einem Vakuumanschluß 19 versehen, so daß im Formwannen-Zwischenraum 12 ein entsprechender Unterdruck herrscht, der über eine Vielzahl durchgehender, sich in den Formenwannen-Innenraum erstreckenden Bohrungen 20 unmittelbar auf das fertige Formteil auswirkt.

Wenn das Formteil nach der in Abhängigkeit vom verwendeten Schaumtyp gewählten Aushärtezeit aus der Form entnommen wird, dann liegt ein vollständig fertiges, keinerlei Nacharbeit erforderndes Formteil vor, wobei wesentlich ist, daß die erfindungsgemäß zum Einsatz kommende Innenhülle bzw. der Trikotstoff-Innenbezug nicht nur Ursache für die ermöglichte Vermeidung jeglicher Nacharbeit ist, sondern sich auch noch im praktischen Gebrauch des fertigen Formteils im Sinne einer Stabilitätserhöhung und einer wesentlichen Verbesserung der Abriebfestigkeit der Rückseite des Polsters auswirkt.

**Bezugszeichenliste**

| | |
|---|---|
| 1 | Außenbezug |
| 2 | Schaumstoffkaschierung |
| 3 | Konturrahmen |
| 4 | Innenbezug bzw. Innenhülle |
| 5 | Schaumstoff |
| 6 | Nähnaht |
| 7 | Außenbezugsrand |
| 8 | Schlitz |
| 9 | Konturpunkt |
| 10 | Formenwanne |
| 11 | Formenwannen-Innenraum |
| 12 | Formenwannen-Zwischenraum |
| 13 | Formenwannen-Außenwand |
| 14 | Konturrahmenbefestigung |
| 15 | Deckelrandteil |
| 16 | Innendeckel |
| 17 | Verschluß |
| 18 | Verschluß |
| 19 | Vakuumanschluß |
| 20 | Durchgangsbohrung |
| 21 | Scharnier |
| 22 | Schutzlage |

**Patentansprüche**

1. Verfahren zum Herstellen eines hinterschäumten Formteils, bei dem ein vorgefertigter Außenbezug unter zumindest bereichsweiser Vorpositionierung in eine verschließbare Form eingebracht und nach dem Eintragen einer Schaummischung durch deren Expansion in den Formhohlraum gedrückt und an dessen Wänden zur Anlage gebracht wird, **dadurch gekennzeichnet,** daß in dem vorgefertigten Außenbezug zumindest ein aus einem elastisch dehnbaren, eine geringe Rückstellkraft aufweisenden Material bestehender und zumindest im wesentlichen allseitig geschlossen ausgebildeter Innenbezug angeordnet und die Schaummischung über eine Öffnung in diesen Innenbezug eingebracht wird.

2. Verfahren zum Herstellen eines hinterschäumten Formteils, bei dem ein vorgefertigter Außenbezug unter zumindest bereichsweiser Vorpositionierung in eine verschließbare Form eingebracht und nach dem Eintragen einer Schaummischung durch deren Expansion in den Formhohlraum gedrückt und an dessen Wänden zur Anlage gebracht wird, **dadurch gekennzeichnet,** daß die Ränder des vorgefertigten Außenbezugs unter Ausbildung einer Beutel- oder Sackstruktur mit einem vorzugsweise elastisch dehnbaren Material verbunden, insbesondere vernäht werden, und daß die Schaummischung sowie gegebenenfalls vor deren Zuführung ein Konturrahmen über eine Öffnung in dem die Rückseite des Formteils bildenden Material in die Beutel- oder Sackstruktur eingebracht wird.

3. Verfahren nach Anspruch 1 oder 2, **dadurch gekennzeichnet,** daß als elastisch dehnbares Material ein Trikotstoff verwendet wird.

4. Verfahren nach einem der vorhergehenden Ansprüche, **dadurch gekennzeichnet,** daß als Außenbezug ein Material mit einer innenseitigen Schaumstoffkaschierung verwendet wird.

5. Verfahren nach einem der vorhergehenden Ansprüche, **dadurch gekennzeichnet,** daß in dem der Einfüllöffnung für die Schaummischung gegenüberliegenden Bereich eine einem Durchschlagen des Schaumes durch den Bezug entgegenwirkende Schutzlage, insbesondere in Form eines Trikotstoffstreifens vorgesehen wird.

6. Verfahren nach Anspruch 2, **dadurch gekennzeichnet,** daß in die Sack- oder Beutelstruktur aus vorgefertigtem Außenbezug und elastisch dehnbarem Material ein insbesondere aus einem Drahtrahmen bestehender Konturrahmen eingebracht und entsprechend seiner Soll-Lage im fertigen Formteil positioniert und fixiert wird.

7. Verfahren nach Ansprüche 1, **dadurch gekennzeichnet,** daß ein insbesondere aus einem Drahtrahmen bestehender Konturrahmen in eine schlauchförmig ausgebildete, vorzugsweise aus einem Trikotstoff bestehende, den Innenbezug bildende Hülle gesteckt, die Hülle mit Ausnahme einer Einfüllöffnung verschlossen und der Konturrahmen dann in vollständig umhülltem Zustand in den rückseitig offenen Außenbezug eingebracht und entsprechend seiner Soll-Lage im fertigen Formteil positioniert und fixiert wird.

8. Verfahren nach einem der vorhergehenden Ansprüche, **dadurch gekennzeichnet,** daß die aus Konturrahmen, Innenbezug und Außenbezug bestehende Einheit an einem Deckelteil der Form positioniert und befestigt wird.

9. Form zur Durchführung des Verfahrens nach einem oder mehreren der vorhergehenden Ansprüche, bestehend aus einer Formenwanne und einem bezüglich der Formenwanne verriegelbaren Deckel, **dadurch gekennzeichnet,** daß am Deckel eine Einrichtung zur Konturrahmenbefestigung vorgesehen ist.

10. Form nach Anspruch 9, **dadurch gekennzeichnet,** daß der Deckel aus einem Randteil und einem Mittelteil besteht, wobei das Randteil bezüglich der Formenwanne und das Mittelteil bezüglich des Randteiles verriegelbar ist.

11. Form nach Anspruch 9 oder 10, **dadurch gekennzeichnet,** daß die Formenwanne doppelwandig ausgebildet und der an eine Vakuumquelle anschließbare Formwannen-Zwischenraum mit dem Formwannen-Innenraum über eine Vielzahl von durchgehenden Bohrungen verbunden ist.

## Fig. 1

## Fig. 2

## Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>Y<br>A | GB-A-2 216 838 (IKEDA BUSSAN CO LTD)<br><br>* Seite 3, Zeile 26 - Seite 5, Zeile 2; Ansprüche; Abbildungen *<br>--- | 9-11<br>1-2<br>6-8 | B29C67/22 |
| Y | GB-A-2 053 774 (S.I.C.A.M. SOCIETA ITALIANA CUSCINI A MOLLE)<br>* Ansprüche 1-3; Abbildungen 2-3 *<br>--- | 1-2 | |
| Y | EP-A-0 152 130 (CLERPREM S.R.L.)<br>* Zusammenfassung; Anspruch 1; Abbildung 1 *<br>--- | 1-2 | |
| A | PATENT ABSTRACTS OF JAPAN<br>vol. 8, no. 270 (M-344)(1707) 11. Dezember 1984<br>& JP-A-59 142 122 ( SEKISUI KASEIHIN KOGYO K.K. )<br>* Zusammenfassung; Abbildung *<br>--- | 3 | |
| X<br>A | US-A-4 793 784 (BELLEVILLE ET AL)<br><br>* Spalte 3, Zeile 34 - Spalte 4, Zeile 22; Abbildungen 1-3 *<br>--- | 9-11<br>2,6,8 | **RECHERCHIERTE SACHGEBIETE (Int. Cl.5)**<br><br>B29C |
| A | DE-A-3 512 267 (KLEPPER BETEILIGUNGS GMBH & CO BOOTSBAU KG)<br>* Seite 16, Zeile 10 - Zeile 25; Abbildungen 1-3 *<br><br>----- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 09 MAERZ 1992 | PIPPING L.E.L. |